# EUROPÄISCHE PATENTSCHRIFT

(11) **EP 3 531 100 B1**
(45) Veröffentlichungstag und Bekanntmachung des Hinweises auf die Patenterteilung: **23.06.2021**
(21) Anmeldenummer: 18020096.6
(22) Anmeldetag: 13.03.2018
(51) Int. Cl.: G01M 13/04

(54) **VORRICHTUNG ZUM ÜBERWACHEN WENIGSTENS EINER LAGEREINRICHTUNG SOWIE MASCHINE MIT WENIGSTENS EINER SOLCHEN VORRICHTUNG**
DEVICE FOR MONITORING AT LEAST ONE BEARING AND MACHINE WITH AT LEAST ONE SUCH DEVICE
DISPOSITIF DE SURVEILLANCE D'AU MOINS UN PALIER ET MACHINE COMPORTANT AU MOINS UN TEL DISPOSITIF

(30) Priorität: 21.02.2018 CZ 20180086
(43) Veröffentlichungstag der Anmeldung: 28.08.2019
(73) Patentinhaber: Skoda Auto a.s., 29301 Mladá Boleslav (CZ)
(72) Erfinder: Oeljeklaus, Michael, Dr., 11000 Praha (CZ); Pesík, Lubomír, 46014 Liberec (CZ); Jancák, Marek, 29306 Kosmonosy (CZ)

(56) Entgegenhaltungen:
- EP-A1- 3 225 967
- DE-A1-102010 034 749
- US-A1- 2017 059 449

## Beschreibung

Die Erfindung betrifft eine Vorrichtung zum Überwachen wenigstens einer Lagereinrichtung. Des Weiteren betrifft die Erfindung eine Maschine mit wenigstens einer solchen Vorrichtung.

Eine solche Vorrichtung zum Überwachen wenigstens einer Lagereinrichtung ist beispielsweise bereits der EP 3 225 967 A1 als bekannt zu entnehmen. Die Vorrichtung umfasst eine Basis, welche als Rahmen ausgebildet sein kann oder als Rahmen bezeichnet wird. Die Basis ist ein erstes Bauelement der Vorrichtung beziehungsweise wird auch als erstes Bauelement der Vorrichtung bezeichnet. Außerdem umfasst die Vorrichtung wenigstens ein Referenzglied, welches über zumindest ein erstes Lager der Lagereinrichtung drehbar an der Basis gelagert ist. Somit ist das Referenzglied relativ zu der Basis drehbar. Die Vorrichtung weist darüber hinaus wenigstens eine Welle auf, welche über zumindest ein zweites Lager der Lagereinrichtung drehbar an dem Referenzglied gelagert ist. Somit ist die Welle relativ zu dem Referenzglied drehbar. Insbesondere ist die Welle auch relativ zu der Basis drehbar. Dabei ist die Welle beispielsweise unter Vermittlung der Lager und des Referenzglieds drehbar an der Basis gelagert. Die Welle ist dabei ein zweites Bauelement der Vorrichtung beziehungsweise wird auch als zweites Bauelement der Vorrichtung bezeichnet.

Darüber hinaus sind Vorrichtungen zur Überwachung von Lagern, insbesondere zur Überwachung von langsam drehenden beziehungsweise langsam laufenden Wälzlagern, bereits aus der JP 56026226 A2 und der JP 3566002 B2 bekannt. Durch das Überwachen der Lager können beispielsweise Störungen identifiziert beziehungsweise diagnostiziert werden. Die bekannten Vorrichtungen umfasst beispielsweise Beschleunigungssensoren, die an einem Rahmen einer Maschine gehalten sein können. Die Maschine umfasst ferner einzelne Wälzlager. Kommt es nun zu Fehlfunktionen, insbesondere Schäden, der Wälzlager, so kommt es zu Vibrationen, welche mittels der Beschleunigungssensoren erfasst werden sollen. Jedoch können Vibrationen in einem gemessenen Frequenzspektrum verloren gehen, sodass es nicht möglich ist, etwaige Fehlfunktionen, insbesondere Schäden, der Lager bereits sehr frühzeitig erfassen und somit identifizieren zu können. Mit anderen Worten ist es bei den herkömmlichen Vorrichtungen üblicherweise nicht möglich, Fehlfunktionen bereits in ihrem Anfangsstadium erfassen zu können.

Ferner ist es denkbar, einen Sensor vorzusehen, mittels welchem ein Punkt an einer Stirnseite der Welle erfasst werden kann. Liegt keine Fehlfunktion vor, beschreibt der Punkt eine kreisförmige Trajektorie, wenn sich die Welle dreht. Bei einer Fehlfunktion eines Lagers der Welle weicht die Trajektorie des Punkts von einem Kreis ab, was mittels des Sensors erfasst werden soll. Jedoch können erst dann derartige Abweichungen der Trajektorie von einem Kreis erfasst werden, wenn die Fehlfunktion des Lagers bereits sehr weit fortgeschritten ist, sodass auch hier etwaige Fehlfunktionen des Lagers nicht frühzeitig erfasst werden können.

Aus der DE 10 2010 034 749 A1 ist eine Vorrichtung zur Überwachung eines rotierenden Maschinenteils bekannt, die einen Sensor, eine Auswerteelektronik, eine Energieversorgungseinheit und eine Sensoreinheit umfasst, welche auf dem rotierenden Maschinenteil angeordnet sind. Die Überwachung basiert dabei auf der Aufnahme von Schwingungssignalen oder Körperschallsignalen des Maschinenteils durch die direkt an dem Maschinenteil montierte Sensoreinheit.

Aus der US 2017/0059449 A1 ist eine Methode zur Zustandsüberwachung von Lagern bekannt, die Planetengetriebe aufweisen. Hierbei wird ebenfalls über die Messung von Schallemissionen und Vibrationen ein Bauteilversaaen diagnostiziert.

Aufgabe der vorliegenden Erfindung ist es daher, eine Vorrichtung und eine Maschine mit wenigstens einer solchen Vorrichtung bereitzustellen, sodass Fehlfunktionen, insbesondere Schäden, der Lagereinrichtung besonders frühzeitig und auf besonders kostengünstige Weise erfasst werden können.

Diese Aufgabe wird durch den Gegenstand des unabhängigen Anspruchs 1 gelöst. Vorteilhafte Weiterbildungen der Erfindung sind durch die abhängigen Patentansprüche, die folgende Beschreibung sowie die Figuren beschrieben.

Ein erster Aspekt der Erfindung betrifft eine Vorrichtung zum Überwachen wenigstens einer Lagereinrichtung. Die Vorrichtung weist eine Basis auf, welche beispielsweise als Rahmen ausgebildet sein kann beziehungsweise auch als Rahmen bezeichnet wird. Die Basis ist ein erstes Bauelement der Vorrichtung beziehungsweise wird auch als erstes Bauelement bezeichnet. Die Vorrichtung weist darüber hinaus wenigstens ein Referenzglied auf, welches über zumindest ein erstes Lager der Lagereinrichtung drehbar an der Basis gelagert ist. Somit ist das Referenzglied relativ zu der Basis drehbar. Das erste Lager ist vorzugsweise als Wälzlager ausgebildet. Insbesondere kann das erste Lager als langsam drehendes beziehungsweise langsam laufendes Lager, insbesondere als langsam drehendes Wälzlager, ausgebildet sein.

Die Vorrichtung weist darüber hinaus wenigstens eine Welle auf, welche ein zweites Bauelement der Vorrichtung ist beziehungsweise auch als zweites Bauelement bezeichnet wird. Die Welle ist über zumindest ein zweites Lager der Lagereinrichtung drehbar an dem Referenzglied gelagert, sodass die Welle relativ zu dem Referenzglied drehbar ist. Insbesondere ist die Welle auch relativ zu der Basis drehbar. Somit ist die Welle beispielsweise unter Vermittlung der Lager und des Referenzglieds drehbar an der Basis gelagert. Insbesondere ist die Welle entlang ihrer radialen Richtung über das zweite Lager an dem Referenzglied abgestützt beziehungsweise gelagert. Dabei ist beispielsweise das Referenzglied in radialer Richtung der Welle über das erste Lager an der Basis abgestützt beziehungsweise gelagert, sodass beispielsweise die Welle in ihrer radialen Richtung unter Vermittlung der Lager und des Referenzglieds an das Basis abgestützt und somit gelagert ist. Insbesondere kann das zweite Lager als langsam drehendes beziehungsweise langsam laufendes Lager, insbesondere als langsam drehendes Wälzlager, ausgebildet sein.

Um nun etwaige Fehlfunktionen, insbesondere Schäden beziehungsweise Beschädigungen der Lagereinrichtung besonders frühzeitig und auf besonders kosten- sowie bauraumgünstige Weise erfassen und somit identifizieren zu können, weist die Vorrichtung erfindungsgemäß eine erste drehmomentübertragende Verbindung auf, welche ein drehmomentübertragend mit der Welle verbundenes Wellenrad aufweist. Das Wellenrad ist ein erstes Rad der Vorrichtung beziehungsweise wird auch als erstes Rad bezeichnet. Unter der ersten drehmomentübertragenden Verbindung beziehungsweise unter dem Merkmal, dass das Wellenrad drehmomentübertragend mit der Welle verbunden ist, ist zu verstehen, dass Drehmomente beziehungsweise Kräfte zwischen dem Wellenrad und der Welle übertragen werden können.

Die erfindungsgemäße Vorrichtung weist darüber hinaus eine zweite drehmomentübertragende Verbindung auf, welche ein drehmomentübertragend mit der Basis verbundenes Basisrad aufweist. Das Basisrad ist ein zweites Rad der Vorrichtung beziehungsweise wird auch als zweites Rad bezeichnet. Unter der zweiten drehmomentübertragenden Verbindung beziehungsweise unter dem Merkmal, dass das Basisrad drehmomentübertragend mit der Basis verbunden ist, ist zu verstehen, dass Drehmomente beziehungsweise Kräfte zwischen der Basis und dem Basisrad übertragen werden können.

Des Weiteren weist die Vorrichtung erfindungsgemäß wenigstens ein drehmomentübertragend mit dem Wellenrad und drehmomentübertragend mit dem Basisrad gekoppeltes Planetenrad auf, welches auch als Satellit oder Satellitenrad bezeichnet wird. Das Planetenrad ist drehbar an einem Träger gelagert, welcher drehfest mit dem Referenzglied verbunden ist. Somit kann sich das Planetenrad um seine eigene Achse relativ zu dem auch Planetenträger bezeichneten Träger drehen. Hierdurch können definierte Umdrehungen gewährleistet werden. Unter dem Merkmal, dass das Planetenrad drehmomentübertragend mit dem Wellenrad verbunden ist, ist zu verstehen, dass Drehmomente beziehungsweise Kräfte zwischen dem Planetenrad und dem Wellenrad übertragen werden können. Unter dem Merkmal, dass das Planetenrad drehmomentübertragend mit dem Basisrad verbunden ist, ist insbesondere zu verstehen, dass Kräfte beziehungsweise Drehmomente zwischen dem Planetenrad und dem Basisrad übertragen werden können.

Des Weiteren ist es erfindungsgemäß vorgesehen, dass zumindest eine der drehmomentübertragenden Verbindungen einstellbar ist. Dies bedeutet, dass die drehmomentübertragende Verbindung zwischen dem Wellenrad und der Welle und/oder die drehmomentübertragende Verbindung zwischen dem Basisrad und der Basis einstellbar ist. Unter dem Merkmal, dass die zumindest eine drehmomentübertragende Verbindung einstellbar ist, ist zu verstehen, dass das maximale Drehmoment, das über die einstellbare drehmomentübertragende Verbindung zwischen dem zu der einstellbaren drehmomentübertragenden Verbindung gehörenden Rad und dem zu der einstellbaren drehmomentübertragenden Verbindung gehörenden Bauelement übertragbar ist beziehungsweise übertragen werden kann, ohne dass es zu einer Relativbewegung, insbesondere einer Relativdrehung, zwischen dem zu der einstellbaren drehmomentübertragenden Verbindung gehörenden Rad und dem zur der drehmomentübertragenden Verbindung gehörenden Bauelement kommt, eingestellt werden kann.

Dabei weist die Vorrichtung des Weiteren erfindungsgemäß wenigstens eine der einstellbaren drehmomentübertragenden Verbindung zugeordnete Sensoreinrichtung auf, mittels welcher zum Überwachen der Lagereinrichtung eine Lageveränderung, insbesondere eine Drehung, des zu der einstellbaren drehmomentübertragenden Verbindung gehörenden Rads relativ zu dem zu der einstellbaren drehmomentübertragenden Verbindung gehörenden Bauelement erfassbar ist. Das zu der einstellbaren drehmomentübertragenden Verbindung gehörende Bauelement ist die Basis beziehungsweise die Welle, wobei das zu der einstellbaren drehmomentübertragenden Verbindung gehörende Rad das Basisrad beziehungsweise das Wellenrad ist.

Durch die Verwendung des Planetenrads ist eine Art Planetengetriebe oder Planetenmechanismus geschaffen, mittels welchem Fehlfunktionen, insbesondere Beschädigungen, der Lagereinrichtung besonders frühzeitig sowie auf bauraum- und kostengünstige Weise erfasst werden können. Wird beispielsweise die Welle während eines Betriebs der Vorrichtung in eine erste Drehrichtung relativ zu der Basis gedreht, so wird dadurch beispielsweise das Wellenrad mit der Welle mitgedreht, da beispielsweise das Wellenrad drehfest mit der Welle verbunden sein kann beziehungsweise da das Wellenrad drehmomentübertragend mit der Welle verbunden ist. Da das Wellenrad drehmomentübertragend mit dem Planetenrad gekoppelt ist, welches wiederum drehmomentübertragend mit dem Basisrad gekoppelt ist, wird durch das Drehen der Welle eine Drehung, insbesondere Umdrehung, des Planetenrads und beispielsweise eine Drehung beziehungsweise Umdrehung des Referenzglieds bewirkt. Durch eine Fehlfunktion der Lagereinrichtung kann es zu einer Lageveränderung, insbesondere zu einer Drehung, des zu der einstellbaren drehmomentübertragenden Verbindung gehörenden Rads relativ zu dem zu der drehmomentübertragenden Verbindung gehörenden Bauelement kommen, was mittels der Sensoreinrichtung erfasst werden kann. Wird also eine solche Lageveränderung erfasst, so kann präzise und frühzeitig auf eine Fehlfunktion der Lagereinrichtung rückgeschlossen werden.

Die einstellbare drehmomentübertragende Verbindung ist eine einstellbare reibschlüssige Verbindung, sodass beispielsweise das Basisrad reibschlüssig drehmomentübertragend mit der Basis verbunden ist, und/oder das Wellenrad ist reibschlüssig drehmomentübertragend mit der Welle verbunden. Die reibschlüssige Verbindung wird auch als kraftschlüssige Verbindung bezeichnet.

Die Erfindung macht sich insbesondere die folgende Funktion der Vorrichtung zunutze, wobei die Funktion im Folgenden anhand eines Beispiels beschrieben wird, bei welchem die einstellbare drehmomentübertragende Verbindung das Basisrad und die Basis umfasst. Dabei ist beispielsweise das Wellenrad drehfest mit der Welle verbunden. Da das Referenzglied über das erste Lager drehbar an der Basis gelagert ist, wird das erste Lager auch als Basislager oder Rahmenlager bezeichnet. Da die Welle über das zweite Lager drehbar an dem Referenzglied gelagert ist, wird das zweite Lager auch als Wellenlager bezeichnet.

Wird zunächst die Welle in die zuvor genannte erste Drehrichtung relativ zu der Basis gedreht, und kommt es zu einer Fehlfunktion, insbesondere zu einer Beschädigung des Wellenlagers, so kann es zur Übertragung eines Drehmoments zwischen der Welle und dem Referenzglied und zwischen dem Planetenrad und dem Basisrad kommen, und bei einer daraus resultierenden Überschreitung der so genannten Tragfähigkeit der einstellbaren drehmomentübertragenden Verbindung, welche bei dem vorliegenden Beispiel zwischen dem Basisrad und der Basis vorgesehen ist, verdreht sich das Basisrad relativ zu der Basis in die erste Drehrichtung. Unter der Überschreitung der Tragfähigkeit ist zu verstehen, dass die einstellbare drehmomentübertragende Verbindung aufgelöst, aufgehoben beziehungsweise getrennt wird, was beispielsweise aufgrund dessen aus der Fehlfunktion des Wellenlagers resultiert, dass das Drehmoment, welches beispielsweise aufgrund der Fehlfunktion zwischen dem Basisrad und der Basis übertragen wird, das zuvor genannte, maximale beziehungsweise maximal übertragbare Drehmoment überschreitet. Da sich das Basisrad relativ zu der Basis verdreht, kommt es zu einer Lageveränderung in Form einer Relativdrehung zwischen der Basis und dem Basisrad, wobei diese Relativdrehung mittels der Sensoreinrichtung erfasst werden kann. In der Folge kann auf eine Fehlfunktion der Lagereinrichtung rückgeschlossen werden.

Kommt es hingegen beispielsweise zu einer Fehlfunktion, insbesondere zu einer Beschädigung, des Rahmenlagers, so kommt es zu einer Übertragung eines Drehmoments zwischen der Basis und dem Referenzglied und zwischen dem Planetenrad und dem Basisrad, und bei Überschreiten der Tragfähigkeit der einstellbaren drehmomentübertragenden Verbindung verdreht sich das Basisrad relativ zu der Basis in eine der erste Drehrichtung entgegengesetzte zweite Drehrichtung. Auch diese Relativdrehung zwischen der Basis und dem Basisrad kann mittels der Sensoreinrichtung erfasst werden, sodass mittels der Sensoreinrichtung besonders frühzeitig sowie auf bauraum- und kostengünstige Weise Fehlfunktionen beziehungsweise Beschädigungen der Lagereinrichtung erfasst werden können.

Auf ähnliche Weise kann eine Beschädigung des jeweiligen Lagers mittels der Sensoreinrichtung erfasst werden, wenn die drehmomentübertragende Verbindung zwischen der Welle und dem Wellenrad als einstellbare drehmomentübertragende Verbindung ausgebildet ist und wenn es aufgrund einer entsprechenden Fehlfunktion zu einer Lageveränderung des Wellenrads relativ zu der Welle kommt. Kommt es beispielsweise aufgrund einer Fehlfunktion zu einer solchen Übertragung eines Drehmoments zwischen der Welle und dem Wellenrad und zwischen dem Planetenrad und dem Wellenrad, sodass die Tragfähigkeit der einstellbaren drehmomentübertragenden Verbindung zwischen dem Wellenrad und der Welle kommt, so kommt es zu einer Relativdrehung zwischen der Welle und dem Wellenrad, was mittels der Sensoreinrichtung erfasst werden kann. In diesem Fall ist es günstig die Welle als stehendes Objekt, das heißt als eine Achse, und die Basis als ein drehendes Objekt, das heißt als ein Rad, zu betreiben. Mit anderen Worten ist unter dem Merkmal, dass die Welle relativ zu der Basis drehbar ist, zu verstehen, dass beispielsweise die Welle um eine Drehachse relativ zu der Basis drehbar ist. Darunter ist zu verstehen, dass sich beispielsweise die Welle um die Drehachse relativ zu der Basis drehen kann, während eine Drehung der Basis um die Drehachse unterbleibt. Ferner ist es denkbar, dass sich die Basis um die Drehachse relativ zu der Welle dreht, während einer Drehung der Welle um die Drehachse unterbleibt.

Im Vergleich zu herkömmlichen Vorrichtungen zum Überwachen von Lagereinrichtungen können mittels der erfindungsgemäßen Vorrichtungen etwaige Fehlfunktionen, insbesondere Beschädigungen, der Lagereinrichtung besonders frühzeitig und somit insbesondere in einem Anfangsstadium identifiziert werden. Außerdem können die Kosten und der Bauraumbedarf besonders gering gehalten werden, da beispielsweise separate, kosten- und bauraumintensive Zusatzmechanismen zu Erzwingung von Drehmomenten vermieden werden können.

In vorteilhafter Ausgestaltung der Erfindung ist wenigstens ein separat von dem zu der einstellbaren drehmomentübertragenden Verbindung gehörenden Bauelement und separat von dem zu der einstellbaren drehmomentübertragenden Verbindung gehörenden Rad ausgebildetes Einstellelement vorgesehen, mittels welchem die drehmomentübertragende Verbindung, das heißt das maximale Drehmoment, das über die einstellbare drehmomentübertragende Verbindung gerade noch übertragen werden kann, ohne dass es zu einer Relativdrehung zwischen dem Rad und dem Bauelement der einstellbaren drehmomentübertragenden Verbindung kommt, einstellbar ist. Durch die Verwendung des Einstellelements kann die einstellbare drehmomentübertragende Verbindung gezielt und bedarfsgerecht eingestellt werden, sodass Fehlfunktionen bereits sehr frühzeitig identifiziert werden können.

Eine weitere Ausführungsform zeichnet sich dadurch aus, dass das Einstellelement, insbesondere direkt, an dem zur einstellbaren drehmomentübertragenden Verbindung gehörenden Bauelement oder an dem zur einstellbaren drehmomentübertragenden Verbindung gehörenden Rad gehalten ist. Hierdurch kann die Teileanzahl und somit das Gewicht, der Bauraumbedarf und die Kosten in einem besonders geringen Rahmen gehalten werden.

Um die Kosten und den Bauraumbedarf besonders gering zu halten, ist der Träger beispielsweise als ein Stiftelement, insbesondere als ein Bolzen, ausgebildet. Dabei hat es sich als vorteilhaft gezeigt, wenn die Welle und beispielsweise mit dieser das Wellenrad um eine erste Drehachse relativ zu der Basis drehbar sind, wobei das Planetenrad um eine zweite Drehachse relativ zu dem Träger drehbar ist. Dabei ist es denkbar, dass die Drehachsen parallel zueinander verlaufen, wodurch beispielsweise der axiale Bauraumbedarf besonders gering gehalten werden kann.

Um insbesondere den radialen Bauraumbedarf besonders gering halten zu können, ist es in weiterer Ausgestaltung der Erfindung vorgesehen, dass die zweite Drehachse schräg oder vorzugsweise senkrecht zur ersten Drehachse verläuft.

Zur Realisierung einer definierten Drehmomentübertragung ist es in weiterer Ausgestaltung der Erfindung vorgesehen, dass das Wellenrad eine erste Verzahnung, das Basisrad eine zweite Verzahnung und das Planetenrad eine dritte Verzahnung aufweist, welche gleichzeitig mit der ersten Verzahnung und mit der zweiten Verzahnung in Eingriff steht. Dies bedeutet, dass das Planetenrad über die jeweiligen Verzahnungen gleichzeitig mit dem Wellenrad und mit dem Basisrad kämmt.

Um dabei die Kosten und den Bauraumbedarf besonders gering halten zu können, ist das Planetenrad vorzugsweise als Stirnrad oder als Kegelrad ausgebildet.

Um die Kosten besonders gering halten zu können und dabei Fehlfunktionen besonders frühzeitig zu ermitteln, ist es ein weiterer Ausgestaltung der Erfindung vorgesehen, dass das Wellenrad, das Planetenrad und das Basisrad als Reibräder, insbesondere als Reibkegelräder, ausgebildet sind, sodass das Planetenrad jeweils reib- beziehungsweise kraftschlüssig drehmomentübertragend mit dem Wellenrad und mit dem Basisrad gekoppelt ist beziehungsweise zusammenwirkt. Das Planetenrad wirkt somit reib- beziehungsweise kraftschlüssig mit dem Wellenrad und mit dem Basisrad zusammen.

Um dabei definierte Umdrehungen sicherstellen und Fehlfunktionen besonders frühzeitig identifizieren zu können, ist es bei einer weiteren Ausführungsform der Erfindung vorgesehen, dass die Vorrichtung wenigstens ein Federelement aufweist, welches eine Federkraft bereitstellt. Mittels der Federkraft ist das Planetenrad in Stützanlage mit dem Wellenrad und mit dem Basisrad gehalten. Dadurch können unerwünschte Relativbewegungen und daraus etwaig resultierende Fehldetektionen verhindert werden.

Bei einer weiteren besonders vorteilhaften Ausführungsform der Erfindung ist das Federelement einerseits an dem Träger und andererseits an dem Planetenrad zumindest mittelbar, insbesondere direkt, abgestützt. Hierdurch kann das Planetenrad in sicherer Stützanlage mit dem Wellenrad und mit dem Basisrad gehalten werden, wodurch unerwünschte Relativbewegungen und daraus etwaig resultierende Fehldetektionen sicher vermieden können.

Um den Bauraumbedarf und die Kosten besonders gering zu halten, ist es bei einer weiteren Ausführungsform der Erfindung vorgesehen, dass die Sensoreinrichtung drehfest mit dem zu der einstellbaren drehmomentübertragenden Verbindung gehörenden Bauelement verbunden ist.

Um die Lageveränderungen besonders präzise erfassen zu können, ist in weiterer Ausgestaltung der Erfindung wenigstens ein drehfest mit dem zu der einstellbaren drehmomentübertragenden Verbindung gehörenden Rad verbundenes, von dem zu der einstellbaren drehmomentübertragenden Verbindung gehörenden Rad, insbesondere in radialer Richtung des zu der einstellbaren drehmomentübertragenden Verbindung gehörenden Rads, abstehendes und mittels der Sensoreinrichtung erfassbares Erfassungselement vorgesehen, über welches mittels der Sensoreinrichtung durch Erfassen des Erfassungselements die Lageveränderung erfassbar ist. Insbesondere kann das Erfassungselement als Bolzen beziehungsweise Stift ausgebildet sein.

Um den Bauraumbedarf besonders gering zu halten, hat es sich als vorteilhaft gezeigt, wenn das Referenzglied als Hohlwelle ausgebildet ist. Dabei ist zumindest ein erster Längenbereich der Welle in zumindest einem zweiten Längenbereich der Hohlwelle aufgenommen. Vorzugsweise ist die Hohlwelle vollständig von der Welle durchdrungen.

Ein zweiter Aspekt der Erfindung betrifft eine Maschine, welche wenigstens eine erfindungsgemäße Vorrichtung aufweist. Die Maschine ist dabei vorzugsweise als Förderanlage zum Fördern von Objekten, als Turbine, als Pumpe oder als Kompressor ausgebildet. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Die erfindungsgemäße Vorrichtung eignet sich insbesondere zur Diagnostik langsam laufender beziehungsweise langsam drehender Lager, insbesondere Wälzlager, wobei die erfindungsgemäße Vorrichtung vielfältig einsetzbar und insbesondere in unterschiedlichen Industriezweigen verwendbar ist. Besonders vorteilhaft kann die erfindungsgemäße Vorrichtung in der Transporttechnik verwendet werden, in welcher Antriebs- und Rotationsbauteile mit geringen Umdrehungen betrieben werden und mittels Wälzlagern gelagert sind. Mit Hilfe von bisher bekannten Diagnosemethoden zum Diagnostizieren von langsam laufenden Wälzlagern kann eine Störung des jeweiligen Wälzlagers in Folge der Abwesenheit messbarer mechanischer Größen, wie beispielsweise eine Abweichung oder eine Beschleunigung von Vibrationen, nicht erfolgreich prädiziert werden, was nun jedoch mittels der erfindungsgemäßen Vorrichtung realisiert werden kann.

Des Weiteren vorteilhaft verwendbar ist die erfindungsgemäße Vorrichtung für oder in Mechanismen von formgebenden Maschinen, deren Fertigungsprozesse sich durch niedrige Geschwindigkeiten und geringe Umdrehungen von Arbeitselementen hervortun. Mit anderen Worten ist die Maschine beispielsweise als Umformmaschine, insbesondere als Umformwerkzeug, ausgebildet, mittels welcher beziehungsweise welchem beispielsweise Bauteile umgeformt werden beziehungsweise umformbar sind.

Im Folgenden sind Ausführungsbeispiele der Erfindung beschrieben. Hierzu zeigt:
- Fig. 1: eine schematische Perspektivansicht einer erfindungsgemäßen Vorrichtung gemäß einer ersten Ausführungsform;
- Fig. 2: eine schematische Längsschnittansicht der erfindungsgemäßen Vorrichtung gemäß der ersten Ausführungsform;
- Fig. 3: eine weitere schematische Längsschnittansicht der Vorrichtung gemäß der ersten Ausführungsform;
- Fig. 4: eine schematische Perspektivansicht der Vorrichtung gemäß einer zweiten Ausführungsform;
- Fig. 5: eine schematische Längsschnittansicht der Vorrichtung gemäß der zweiten Ausführungsform;
- Fig. 6: eine weitere schematische Längsschnittansicht der Vorrichtung gemäß der zweiten Ausführungsform;
- Fig. 7: eine schematische Perspektivansicht der Vorrichtung gemäß einer dritten Ausführungsform;
- Fig. 8: eine schematische Längsschnittansicht der Vorrichtung gemäß der dritten Ausführungsform; und
- Fig. 9: eine weitere schematische Längsschnittansicht der Vorrichtung gemäß der dritten Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Fig. sind funktionsgleiche Elemente jeweils mit denselben Bezugszeichen versehen.

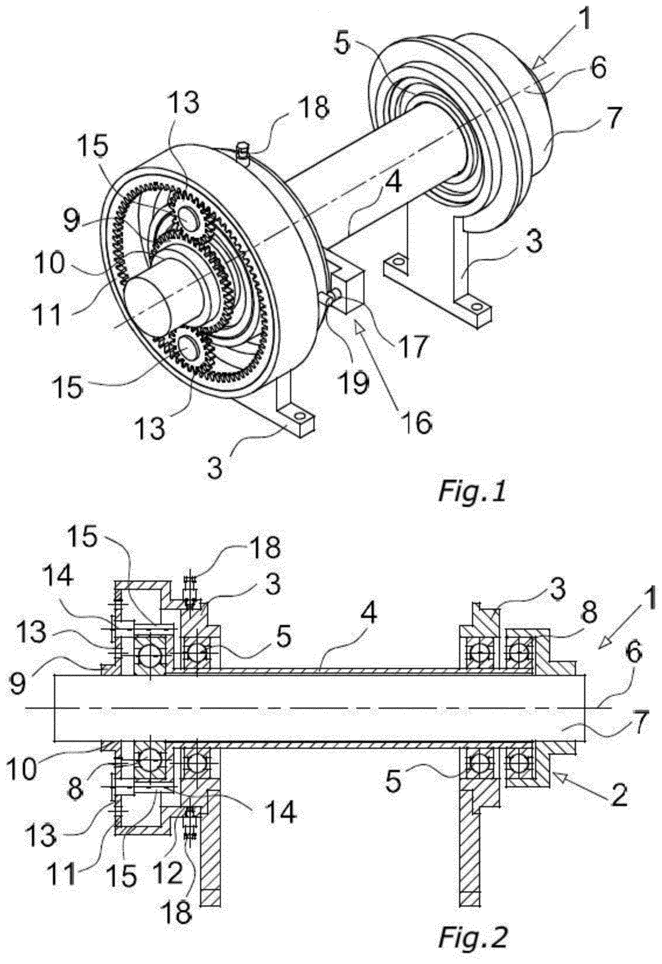

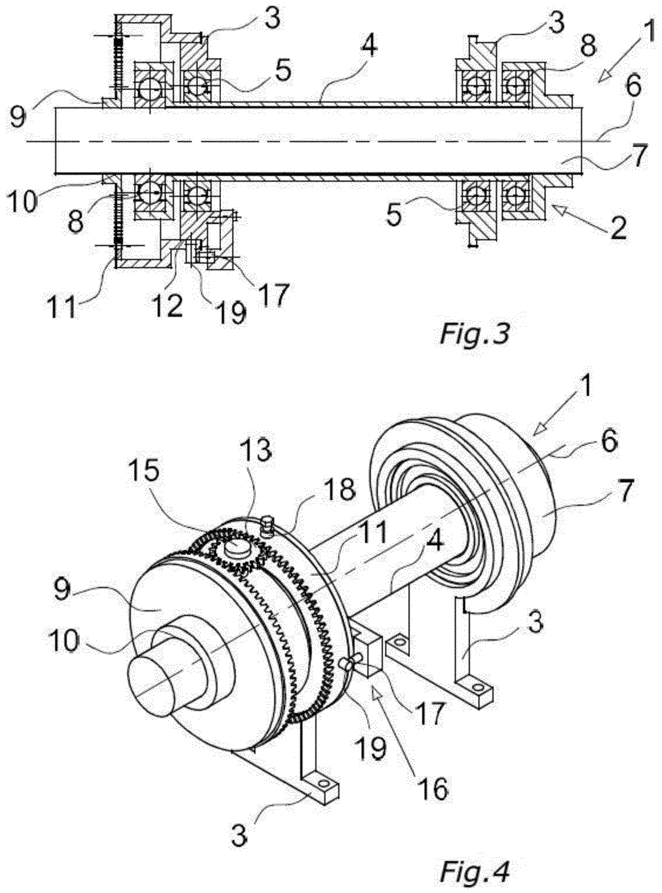

Fig. 1 zeigt in einer schematischen Perspektivansicht eine Vorrichtung 1 zum Überwachen wenigstens einer aus Fig. 2 und 3 erkennbaren Lagereinrichtung 2, wobei in Fig. 1 bis 3 eine erste Ausführungsform der Vorrichtung 1 veranschaulicht ist. Die Vorrichtung 1 weist eine Basis 3 auf, welche beispielsweise als Rahmen ausgebildet sein kann oder auch als Rahmen bezeichnet wird. Die Basis 3 ist ein erstes Bauelement der Vorrichtung 1 beziehungsweise wird auch als erstes Bauelement bezeichnet. Die Vorrichtung 1 umfasst darüber hinaus ein Referenzglied 4, welches bei den in den Fig. veranschaulichten Ausführungsbeispielen als eine Hohlwelle ausgebildet ist. Das Referenzglied 4 ist über erste Lager 5 der Lagereinrichtung 2 drehbar an der Basis 3 gelagert, sodass das Referenzglied 4 um eine Drehachse 6 relativ zu der Basis 3 drehbar ist. Das jeweilige erste Lager 5 ist als Wälzlager und dabei beispielsweise als Kugellager ausgebildet. Die Vorrichtung 1 weist darüber hinaus wenigstens eine Welle 7 auf, welche ein zweites Bauelement der Vorrichtung 1 ist beziehungsweise auch als zweites Bauelement bezeichnet wird. Die Welle 7 ist über zweite Lager 8 drehbar an dem Referenzglied 4 gelagert, wobei die Welle 7 und das Referenzglied 4 koaxial zueinander angeordnet sind. Somit ist die Welle 7 um die Drehachse 6 relativ zu dem Referenzglied 4 drehbar. Außerdem ist die Welle 7 beispielsweise um die Drehachse 6 relativ zu der Basis 3 drehbar. Da die Welle 7 über die zweiten Lager 8 drehbar an dem Referenzglied 4 gelagert ist, werden die zweiten Lager 8 auch als Wellenlager bezeichnet. Da das Referenzglied 4 über die ersten Lager 5 drehbar an der Basis 3 gelagert ist, werden die ersten Lager 5 auch als Rahmenlager oder Basislager bezeichnet. Auch das jeweilige zweite Lager 8 ist beispielsweise als Wälzlager und dabei beispielsweise als Kugellager ausgebildet.

Die Vorrichtung 1 ist beispielsweise Bestandteil einer Maschine, wobei während eines Betriebs der Maschine und somit der Vorrichtung 1 die Welle 7 beispielsweise angetrieben und dadurch in eine Drehrichtung um die Drehachse 6 relativ zu der Basis 3 gedreht wird. Die Welle 7 ist beispielsweise als Vollwelle ausgebildet. Außerdem ist die Hohlwelle in axialer Richtung der Welle 7 vollständig von der Welle 7 durchdrungen, sodass beispielsweise die Welle 7 in ihrer axialen Richtung beidseitig aus dem Referenzglied 4 (Hohlwelle) herausragt. Das jeweilige Lager 5 beziehungsweise 8 ist beispielsweise ein langsam laufendes beziehungsweise langsam drehendes Lager, insbesondere ein langsam laufendes Wälzlager, da beispielsweise die Welle 7 während des Betriebs mit nur geringen Drehzahlen relativ zur Basis 3 gedreht wird.

Um nun etwaige Fehlfunktionen, insbesondere Schäden beziehungsweise Beschädigungen, der Lagereinrichtung 2 und somit der Lager 5 und/oder 8, auf bauraum- und kostengünstige Weise möglichst frühzeitig erfassen und in der Folge identifizieren zu können, weist die Vorrichtung 1 ein drehmomentübertragend mit der Welle 7 verbundenes Wellenrad 9 auf. Das Wellenrad 9 ist ein erstes Rad der Vorrichtung 1 beziehungsweise wird auch als erstes Rad bezeichnet. Dabei weist die Vorrichtung 1 eine erste drehmomentübertragende Verbindung 10 auf, über welche das Wellenrad 9 drehmomentübertragend mit der Welle 7 verbunden ist. Somit umfasst die drehmomentübertragende Verbindung 10 die Welle 7 und das mit dieser drehmomentübertragend verbundene Wellenrad 9. Bei den in den Fig. veranschaulichten Ausführungsbeispielen ist die drehmomentübertragende Verbindung 10 eine drehfeste Verbindung, sodass bei den in den Fig. veranschaulichten Ausführungsbeispielen das Wellenrad 9 drehfeste mit der Welle 7 verbunden ist.

Des Weiteren weist die Vorrichtung 1 ein auch als Rahmenrad bezeichnetes Basisrad 11 auf, welches drehmomentübertragend mit der Basis 3 verbunden ist. Somit ist eine zweite drehmomentübertragende Verbindung 12 vorgesehen, über welche das Basisrad 11 drehmomentübertragend mit der Basis 3 verbunden ist. Dies bedeutet, dass die zweite drehmomentübertragende Verbindung 12 die Basis 3 und das Basisrad 11 aufweist. Das Basisrad 11 ist dabei ein zweites Rad der Vorrichtung 1 beziehungsweise wird auch als zweites Rad bezeichnet. Bei den in den Fig. veranschaulichten Ausführungsbeispielen ist die drehmomentübertragende Verbindung 12 einstellbar, sodass das maximale Drehmoment, welches zwischen dem Basisrad 11 und der Basis 3 gerade noch übertragen werden kann, ohne dass es zu einer Relativdrehung zwischen dem Basisrad 11 und der Basis 3 kommt, bedarfsgerecht eingestellt werden kann. Vorliegend ist die drehmomentübertragende Verbindung 10 nicht einstellbar. Die drehmomentübertragende Verbindung 12 ist beispielsweise eine reib- beziehungsweise kraftschlüssige Verbindung, deren maximal zwischen dem Basisrad 11 und der Basis 3 übertragbares Drehmoment bedarfsgerecht eingestellt werden kann.

Darüber hinaus sind Planetenräder 13 vorgesehen, welche auch als Satelliten oder Satellitenräder bezeichnet werden. Die Planetenräder 13 sind jeweils gleichzeitig mit dem Basisrad 11 und dem Wellenrad 9 drehmomentübertragend verbunden. Des Weiteren ist das jeweilige Planetenrad 13 drehbar an einem jeweiligen korrespondierenden und vorliegend als Bolzen 15 ausgebildeten Träger gelagert, wobei der jeweilige Bolzen 15 drehfest mit dem Referenzglied 4 verbunden ist. Besonders gut aus Fig. 2 ist erkennbar, dass das jeweilige Planetenrad 13 um eine jeweilige zweite Drehachse 14 relativ zu dem jeweiligen Bolzen 15 drehbar ist, wobei die jeweilige zweite Drehachse 14 in radialer Richtung der Welle 7 von der ersten Drehachse 6 beabstandet ist und parallel zur Drehachse 6 verläuft. Des Weiteren umfasst die Vorrichtung 1 wenigstens eine der einstellbaren drehmomentübertragenden Verbindung 12 zugeordnete Sensoreinrichtung 16, die wenigstens oder genau einen der einstellbaren drehmomentübertragenden Verbindung 12 zugeordneten Sensor 17 aufweist. Mittels des Sensors 17 sind zum Überwachen der Lagereinrichtung 2 Lageveränderungen, insbesondere Relativdrehungen, zwischen dem Basisrad 11 und der Basis 3 erfassbar. Kommt es beispielsweise zu Beschädigungen der Lager 5 und/oder der Lager 8, so kommt es dadurch zu um die Drehachse 6 verlaufenden Relativdrehungen zwischen dem Basisrad 11 und der Basis 3, da beispielsweise aufgrund der Beschädigung ein Drehmoment, welches aufgrund der Beschädigung zwischen dem Basisrad 11 und der Basis 3 übertragen wird, größer als das zuvor beschriebene, maximale Drehmoment der einstellbaren drehmomentübertragenden Verbindung 12 ist.

Um die drehmomentübertragende Verbindung 12 besonders einfach und bedarfsgerecht einstellen zu können, ist wenigstens ein separat von der Basis 3 und separat von dem Basisrad 11 ausgebildetes Einstellelement 18 vorgesehen, mittels welchem die rehmomentübertragende Verbindung 12 beziehungsweise das maximale Drehmoment einstellbar ist. Bei der in Fig. 1 bis 3 gezeigten ersten Ausführungsform ist die einstellbare rehmomentübertragende Verbindung 12 als kraft- beziehungsweise reibschlüssige Verbindung ausgebildet, sodass das Einstellelement 18 als Reibelement ausgebildet ist. Mittels des Reibelements kann eine Reibung zwischen dem Basisrad 11 und der Basis 3 eingestellt werden, wodurch das zuvor beschriebenen maximale Drehmoment und somit die drehmomentübertragende Verbindung 12 an sich einstellbar sind beziehungsweise eingestellt werden. Durch Erhöhen der Reibung zwischen dem Basisrad 11 und der Basis 3 wird das maximale Drehmoment erhöht. Durch Verringern der Reibung wird das maximale Drehmoment verringert. Das Einstellelement 18 ist dabei an dem Basisrad 11 oder vorliegend an der Basis 3 direkt gehalten und beispielsweise relativ zur Basis 3 bewegbar, um dadurch die Reibung und somit das maximale Drehmoment einzustellen.

Bei der ersten Ausführungsform sind das Wellenrad 9, das jeweilige Planetenrad 13 und das Basisrad 11 als Zahnräder ausgebildet, wobei das Wellenrad 9 und das jeweilige Planetenrad 13 eine jeweilige Außenverzahnung aufweisen. Das Basisrad 11 ist als Hohlrad ausgebildet und weist somit einen Innenverzahnung auf. Dabei steht die Außenverzahnung des jeweiligen Planetenrads 13 gleichzeitig in Eingriff mit der Außenverzahnung des Wellenrads 9 und in Eingriff mit der Innenverzahnung des Basisrads 11, sodass das jeweiligen Planetenrad 13 gleichzeitig mit dem Wellenrad 9 und dem Basisrad 11 kämmt. Dabei ist bei der ersten Ausführungsform das jeweilige Planetenrad 13 als Stirnrad beziehungsweise Stirnzahnrad ausgebildet. Des Weiteren ist besonders gut aus Fig. 1 bis 3 erkennbar, dass die Sensoreinrichtung 16, insbesondere der Sensor 17, drehfest mit der Basis 3 verbunden ist. Außerdem ist ein drehfest mit dem Basisrad 11 verbundenes, von dem Basisrad 11 in radialer Richtung des Basisrads 11 beziehungsweise der Welle 7 nach außen hin abstehendes und mittels des Sensors 17 erfassbares Erfassungselement vorliegend in Form eines Bolzens 19 vorgesehen, über welches mittels des Sensors 17 durch Erfassen des Bolzens 19 die Lageveränderungen erfassbar sind.

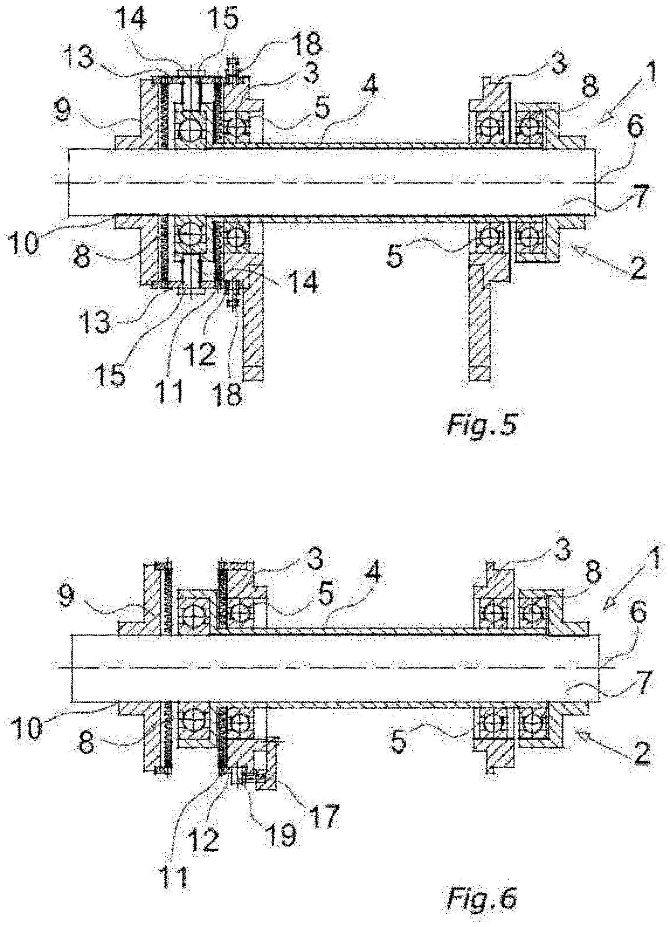

Fig. 4 bis 6 veranschaulichen eine zweite Ausführungsform der Vorrichtung 1. Die zweite Ausführungsform unterscheidet sich insbesondere dadurch von der ersten Ausführungsform, dass die zweite Drehachse 14 senkrecht zur ersten Drehachse 6 verläuft. Während bei der ersten Ausführungsform das jeweilige Planetenrad 13 in radialer Richtung der Welle 7 zwischen dem Wellenrad 9 und dem Basisrad 11 angeordnet ist, ist bei der zweiten Ausführungsform das jeweilige Planetenrad 13 in axialer Richtung der Welle 7 und somit in axialer Richtung des Basisrads 11 und des Wellenrads 9 zwischen dem Wellenrad 9 und dem Basisrad 11 angeordnet. Dabei weisen sowohl das Wellenrad 9 als auch das Basisrad 11 eine Außenverzahnung, insbesondere eine Kronenverzahnung, auf, wobei beispielsweise das Basisrad 11 beziehungsweise das Wellenrad 9 als Kronenrad ausgebildet ist. Das jeweilige Planetenrad 13 ist beispielsweise als ein Kegelrad ausgebildet. Auch bei der zweiten Ausführungsform ist die einstellbare drehmomentübertragende Verbindung 12 zwischen dem Basisrad 11 und der Basis 3 eine reib- beziehungsweise kraftschlüssige Verbindung und somit eine Reibverbindung, welche mittels des Reibelements einstellbar ist.

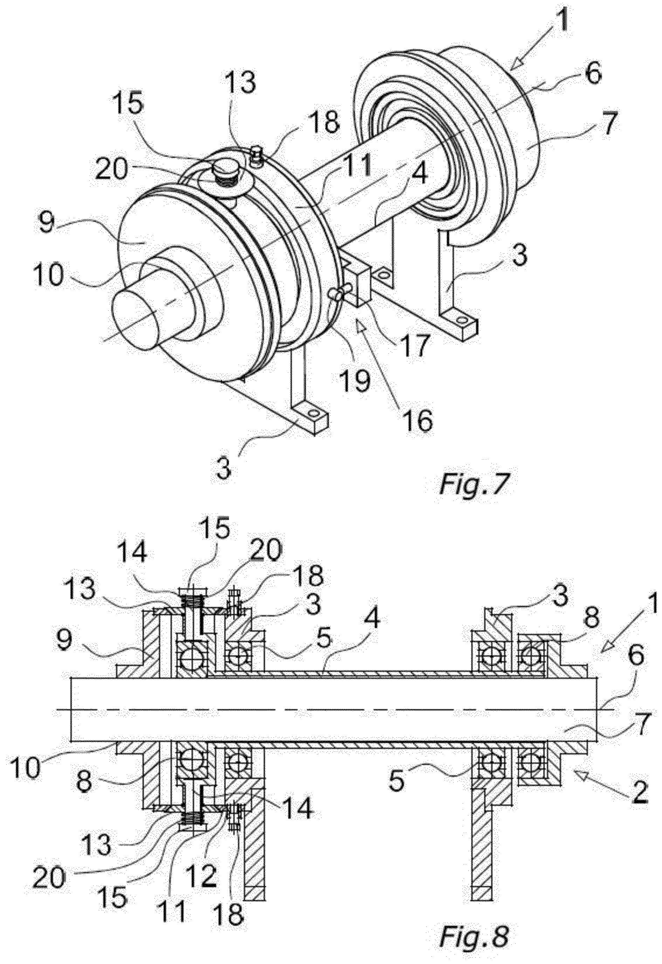

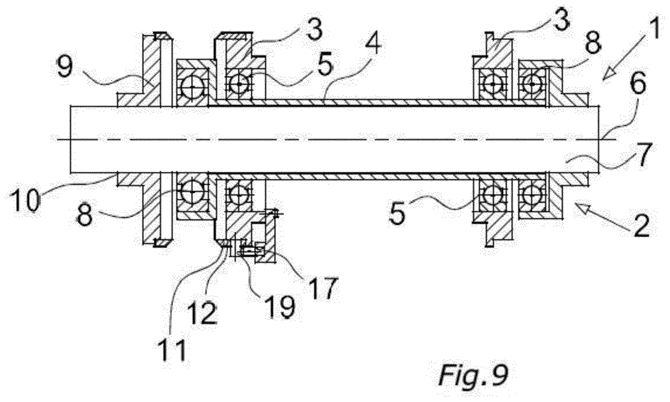

Schließlich veranschaulichen Fig. 7 bis 9 eine dritte Ausführungsform der Vorrichtung 1. Bei der dritten Ausführungsform sind das jeweilige Planetenrad 13, das Wellenrad 9 und das Basisrad 11 als Reibräder ausgebildet, welche reib- beziehungsweise kraftschlüssig drehmomentübertragend miteinander verbunden sind. Insbesondere sind die Reibräder ausschließlich reib- beziehungsweise kraftschlüssig drehmomentübertragend miteinander verbunden. Hierzu weisen die Reibräder jeweilige Reibflächen, insbesondere Reibkegel, auf, welche sich gegenseitig berühren, wodurch die Reibräder reibschlüssig drehmomentübertragend miteinander gekoppelt sind. Dabei ist beispielsweise das jeweilige Planetenrad 13 als Kegelrad und dabei als Kegelreibrad ausgebildet.

Bei der dritten Ausführungsform ist je Planetenrad 13 ein als Andruckfeder 20 ausgebildetes beziehungsweise fungierendes Federelement vorgesehen, welches eine Federkraft bereitstellt, die in radialer Richtung der Welle 7 wirkt. Die Federkraft wirkt auf das jeweilige Planetenrad 13, sodass das jeweilige Planetenrad 13 mittels der Federkraft in Stützanlage mit dem Wellenrad 9 und dem Basisrad 11 gehalten ist. Dadurch kann ein Reibbeziehungsweise Kraftschluss zwischen dem Planetenrad 13 und dem Basisrad 11 sowie zwischen dem Planetenrad 13 und dem Wellenrad 9 sichergestellt werden. Demgegenüber wirkt bei der ersten Ausführungsform und bei der zweiten Ausführungsform das jeweilige Planetenrad 13 formschlüssig mit dem Wellenrad 9 und formschlüssig mit dem Basisrad 11 zusammen, da bei der ersten Ausführungsform und bei der zweiten Ausführungsform die Außenverzahnung des Planetenrads 13 in Eingriff mit der Außenverzahnung des Wellenrads 9 und in Eingriff mit der Außenverzahnung beziehungsweise Innenverzahnung des Basisrads 11 steht.

### Bezugszeichenliste

- 1: Vorrichtung
- 2: Lagereinrichtung
- 3: Basis
- 4: Referenzglied
- 5: erstes Lager
- 6: Drehachse
- 7: Welle
- 8: zweites Lager
- 9: Wellenrad
- 10: erste drehmomentübertragende Verbindung
- 11: Basisrad
- 12: zweite drehmomentübertragende Verbindung
- 13: Planetenrad
- 14: zweite Drehachse
- 15: Bolzen
- 16: Sensoreinrichtung
- 17: Sensor
- 18: Einstellelement
- 19: Bolzen
- 20: Andruckfeder

## Patentansprüche

1. Vorrichtung (1) zum Überwachen wenigstens einer Lagereinrichtung (2), mit einer Basis (3) als erstes Bauelement, mit wenigstens einem Referenzglied (4), welches über zumindest ein erstes Lager (5) der Lagereinrichtung (2) drehbar an der Basis (3) gelagert ist, und mit wenigstens einer Welle (7) als zweites Bauelement, welche über zumindest ein zweites Lager (8) der Lagereinrichtung (2) drehbar an dem Referenzglied (4) gelagert ist,
**gekennzeichnet durch**:
- eine erste drehmomentübertragende Verbindung (10), welche ein drehmomentübertragend mit der Welle (7) verbundenes Wellenrad (9) als erstes Rad aufweist;
- eine zweite drehmomentübertragende Verbindung (12), welche ein drehmomentübertragend mit der Basis (3) verbundenes Basisrad (11) als zweites Rad aufweist;
- wenigstens ein drehmomentübertragend mit dem Wellenrad (9) und drehmomentübertragend mit dem Basisrad (11) zusammenwirkendes Planetenrad (13), welches an einem drehfest mit dem Referenzglied (4) verbundenen Träger (15) drehbar gelagert ist, wobei die zweite drehmomentübertragenden Verbindungen (12) eine reibschlüssige Verbindung ist, deren maximal übertragbares Drehmoment einstellbar ist; und
- wenigstens eine der einstellbaren drehmomentübertragenden Verbindung (10, 12) zugeordneten Sensoreinrichtung (16), mittels welcher zum Überwachen der Lagereinrichtung (2) eine Lageveränderung des zu der einstellbaren drehmomentübertragenden Verbindung (10, 12) gehörenden Rads (9, 11) relativ zu dem zu der einstellbaren drehmomentübertragenden Verbindung (10, 12) gehörenden Bauelement (3, 7) erfassbar ist.

2. Vorrichtung (1) nach Anspruch 1,
**gekennzeichnet durch**
wenigstens ein separat von dem zu der einstellbaren drehmomentübertragenden Verbindung (12) gehörenden Bauelement (3, 7) und separat von dem zu der einstellbaren drehmomentübertragenden Verbindung (10) gehörenden Rad (9, 11) ausgebildetes Einstellelement (18), welches ein Reibelement ist, mittels welchem das maximal übertragbare Drehmoment der drehmomentübertragenden Verbindung (10, 12) einstellbar ist.

3. Vorrichtung (1) nach Anspruch 2,
**dadurch gekennzeichnet, dass**
das Einstellelement (18) an dem Bauelement (3, 7) oder an dem Rad (9, 11) der einstellbaren drehmomentübertragenden Verbindung (10, 12) gehalten ist.

4. Vorrichtung (1) nach einem der vorhergehenden Ansprüche,
**dadurch gekennzeichnet, dass**
die Welle (7) um eine erste Drehachse (6) relativ zu der Basis (3) drehbar ist, wobei das Planetenrad (13) um eine zweite Drehachse (14) relativ zu dem Träger (15) drehbar ist.

5. Vorrichtung (1) nach Anspruch 4,
**dadurch gekennzeichnet, dass**
die zweite Drehachse (14) schräg oder senkrecht zur ersten Drehachse (6) verläuft.

6. Vorrichtung (1) nach einem der vorhergehenden Ansprüche,
**dadurch gekennzeichnet, dass**
das Wellenrad (9) eine erste Verzahnung, das Basisrad (11) eine zweite Verzahnung und das Planetenrad (13) eine dritte Verzahnung aufweist, welche gleichzeitig mit der ersten Verzahnung und mit der zweiten Verzahnung in Eingriff steht.

7. Vorrichtung (1) nach Anspruch 6,
**dadurch gekennzeichnet, dass**
das Planetenrad (13) als Stirnrad oder als Kegelrad ausgebildet ist.

8. Vorrichtung (1) nach einem der Ansprüche 1 bis 5,
**dadurch gekennzeichnet, dass**
das Wellenrad (9), das Planetenrad (13) und das Basisrad (11) als Reibräder ausgebildet sind, sodass das Planetenrad (13) jeweils reibschlüssig drehmomentübertragendend mit dem Wellenrad (9) und mit dem Basisrad (11) gekoppelt ist.

9. Vorrichtung (1) nach Anspruch 8,
**gekennzeichnet durch**
wenigstens ein Federelement (13), welches eine Federkraft bereitstellt, mittels welcher das Planetenrad (13) in Stützanlage mit dem Wellenrad (9) und mit dem Basisrad (11) gehalten ist.

10. Vorrichtung (1) nach Anspruch 9 in dessen Rückbezug über Anspruch 8 auf Anspruch 4 oder 5,
**dadurch gekennzeichnet, dass**
das Federelement (13) einerseits an dem Träger (15) und andererseits an dem Planetenrad (13) jeweils zumindest mittelbar, insbesondere direkt, abgestützt ist.

11. Vorrichtung (1) nach einem der vorhergehenden Ansprüche,
**dadurch gekennzeichnet, dass**
die Sensoreinrichtung (16) drehfest mit dem zu der einstellbaren drehmomentübertragenden Verbindung (10, 12) gehörenden Bauelement (3, 7) verbunden ist.

12. Vorrichtung (1) nach einem der vorhergehenden Ansprüche,
**gekennzeichnet durch**
wenigstens ein drehfest mit dem zu der einstellbaren drehmomentübertragenden Verbindung gehörenden (10, 12) Rad (9, 11) verbundenes, von dem zu der einstellbaren drehmomentübertragenden Verbindung (10, 12) gehörenden Rad (9, 11), insbesondere in radialer Richtung des zu der einstellbaren drehmomentübertragenden Verbindung (10, 12) gehörenden Rads (9, 11), abstehendes und mittels der Sensoreinrichtung (16) erfassbares Erfassungselement (19), über welches mittels der Sensoreinrichtung (16) durch Erfassen des Erfassungselements (19) die Lageveränderung erfassbar ist.

13. Vorrichtung (1) nach einem der vorhergehenden Ansprüche,
**dadurch gekennzeichnet, dass**
das Referenzglied (4) als Hohlwelle ausgebildet ist, wobei zumindest ein erster Längenbereich der Welle (7) in zumindest einem zweiten Längenbereich der Hohlwelle aufgenommen ist.

14. Maschine, mit wenigstens einer Vorrichtung (1) nach einem der vorhergehenden Ansprüche, wobei die Maschine als Förderanlage zum Fördern von Objekten, als Turbine, Pumpe oder Kompressor ausgebildet ist.

## Claims

1. A device (1) for monitoring at least one bearing device (2), having a base (3) as first structural element, with at least one reference member (4), which can be rotatably mounted on the base (3) via at least one first bearing (5) of the bearing device (2), and having at least one shaft (7) as second structural element, which can be rotatably mounted on the reference member (4) via at least one second bearing (8) of the bearing device (2), **characterized by**:
- a first torque-transmitting connection (10), which has a shaft wheel (9) as first wheel connected in a torque-transmitting manner to the shaft (7);
- a second torque-transmitting connection (12), which has a base wheel (11) as second wheel connected in a torque-transmitting manner to the base (3);
- at least one planet wheel interacting in a torque-transmitting manner with the shaft wheel (9) and in a torque-transmitting manner with the base wheel (11), which planet wheel (13) is rotatably mounted on a carrier (15) connected in a rotationally fixed manner to the reference member (4), wherein the second torque-transmitting connection (12) is a frictionally locking connection, the maximum transmittable torque of which can be set; and
- at least one sensor device (16) assigned to the settable torque-transmitting connection (10, 12), by means of which a change of position of the wheel (9, 11) belonging to the settable torque-transmitting connection (10, 12) relative to the structural element (3, 7) belonging to the settable torque-transmitting connection (10, 12) can be detected for monitoring the bearing device (2).

2. The device (1) according to claim 1,
**characterized by**
at least one setting element (18) formed separately from the structural element (3, 7) belonging to the settable torque-transmitting connection (12) and separately from the wheel (9, 11) belonging to the settable torque-transmitting connection (10), which setting element is a friction element, by means of which the maximum transmittable torque of the torque-transmitting connection (10, 12) can be set.

3. The device (1) according to claim 2,
**characterized in that**
the setting element (18) is held on the structural element (3, 7) or on the wheel (9, 11) of the settable torque-transmitting connection (10, 12).

4. The device (1) according to any one of the preceding claims,
**characterized in that**
the shaft (7) can be rotated about a first axis of rotation (6) relative to the base (3), wherein the planet wheel (13) can be rotated about a second axis of rotation (14) relative to the carrier (15).

5. The device (1) according to claim 4,
**characterized in that**
the second axis of rotation (14) extends obliquely or perpendicularly to the first axis of rotation (6).

6. The device (1) according to any one of the preceding claims,
**characterized in that**
the shaft wheel (9) has a first toothing, the base wheel (11) has a second toothing and the planet wheel (13) has a third toothing, which at the same time is engaged with the first toothing and with the second toothing.

7. The device (1) according to claim 6,
**characterized in that**
the planet wheel (13) is designed as a spur wheel or as a bevel wheel.

8. The device (1) according to any one of claims 1 to 5,
**characterized in that**
the shaft wheel (9), the planet wheel (13) and the base wheel (11) are designed as friction wheels, so that the planet wheel (13) is in each case frictionally coupled in a torque-transmitting manner with the shaft wheel (9) and with the base wheel (11).

9. The device (1) according to claim 8,
**characterized by**
at least one spring element (13), which provides a spring force, by means of which the planet wheel (13) is held in supporting contact with the shaft wheel (9) and with the base wheel (11).

10. The device (1) according to claim 9 in its reference via claim 8 back to claim 4 or 5,
**characterized in that**
the spring element (13), on the one hand, is in each case supported at least indirectly, in particular directly, on the carrier (15) and, on the other hand, on the planet wheel (13).

11. The device (1) according to any one of the preceding claims,
**characterized in that**
the sensor device (16) is connected in a rotationally fixed manner to the structural element (3, 7) belonging to the settable torque-transmitting connection (10, 12).

12. The device (1) according to any one of the preceding claims,
**characterized by**
at least one detection element (19) connected in a rotationally fixed manner to the wheel (9, 11) belonging to the settable torque-transmitting connection (10, 12), projecting from the wheel (9, 11) belonging to the settle torque-transmitting connection (10, 12), in particular in the radial direction of the wheel (9, 11) belonging to the settable torque-transmitting connection (10, 12) and detectable by means of the sensor device (16), via which the change of position is detectable by means of the sensor device (16) by detecting the detection element (19).

13. The device (1) according to any one of the preceding claims,
**characterized in that**
the reference member (4) is designed as a hollow shaft, wherein at least a first longitudinal region of the shaft (7) is accommodated in at least one second longitudinal region of the hollow shaft.

14. A machine, having at least one device (1) according to any one of the preceding claims, wherein the machine is designed as a conveying system for conveying objects, as a turbine, pump or compressor.

## Revendications

1. Dispositif (1) pour la surveillance d'au moins un dispositif de palier (2), avec ne base (3) en tant que premier composant, avec au moins un organe de référence (4), qui est logé de manière rotative par l'intermédiaire d'au moins un premier palier (5) du dispositif de palier (2) au niveau de la base (3), et avec au moins un arbre (7) en tant que deuxième composant, qui est logé de manière rotative par l'intermédiaire d'au moins un deuxième palier (8) du dispositif de palier (2) au niveau de l'organe de référence (4),
**caractérisé par** :
- une première liaison de transmission de couple (10) qui comprend une roue d'arbre (9) reliée avec transmission de couple avec l'arbre (7), en tant que première roue ;
- une deuxième liaison de transmission de couple (12), qui comprend une roue de base (11) reliée avec transmission de coupe avec la base (3), en tant que deuxième roue ;
- au moins une roue planétaire (13) interagissant par transmission de couple avec la roue d'arbre (9) et par transmission de couple avec la roue de base (11), qui est logée de manière rotative au niveau d'un support (15) relié de manière solidaire en rotation avec l'organe de référence (4), dans lequel la deuxième liaison de transmission de couple (12) est une liaison par friction dont le couple transmissible maximal est réglable ; et
- au moins un des dispositifs de capteurs (16) correspondant à la liaison de transmission de couple réglable (10, 12), au moyen duquel, pour la surveillance du dispositif de palier (2), un changement de position de la roue (9, 11) appartenant à la liaison de transmission de couple réglable (10, 12) par rapport au composant (3, 7) appartenant à la liaison de transmission de couple réglable (10, 12) peut être détecté.

2. Dispositif (1) selon la revendication 1,
**caractérisé par**
au moins un élément de réglage (18) distinct du composant (3, 7) appartenant à la liaison de transmission de couple réglable (12) et distinct du composant (9, 11) appartenant à la liaison de transmission de couple réglable (10), qui est un élément de friction au moyen duquel le couple transmissible maximal de la liaison de transmission de couple (10, 12) peut être réglé.

3. Dispositif (1) selon la revendication 2,
**caractérisé en ce que**
l'élément de réglage (18) est maintenu sur le composant (3, 7) ou sur la roue (9, 11) de la liaison de transmission de couple réglable (10, 12).

4. Dispositif (1) selon l'une des revendications précédentes,
**caractérisé en ce que**
l'arbre (7) peut tourner autour d'un premier axe de rotation (6) par rapport à la base (3), dans lequel la roue planétaire (13) peut tourner autour d'un deuxième axe de rotation (14) par rapport au support (15).

5. Dispositif (1) selon la revendication 4,
**caractérisé en ce que**
le deuxième axe de rotation (14) s'étend de manière oblique ou perpendiculaire par rapport au premier axe de rotation (6).

6. Dispositif (1) selon l'une des revendications précédentes,
**caractérisé en ce que**
la roue d'arbre (9) présente une première denture, la roue de base (11) présente une deuxième denture et la roue planétaire (13) présente une troisième denture, qui est en engrènement à la fois avec la première denture et la deuxième denture.

7. Dispositif (1) selon la revendication 6,
**caractérisé en ce que**
la roue planétaire (13) est conçue comme une roue droite ou une roue conique.

8. Dispositif (1) selon l'une des revendications 1 à 5,
**caractérisé en ce que**
la roue d'arbre (9), la roue planétaire (13) et la roue de base (11) sont conçues comme des roues de friction de façon à ce que la roue planétaire (13) soit couplée par friction avec transmission de couple respectivement avec la roue d'arbre (9) et avec la roue de base (11).

9. Dispositif (1) selon la revendication 8,
**caractérisé par**
au moins un élément de ressort (13), qui génère une force élastique au moyen laquelle la roue planétaire (13) est maintenue en position d'appui avec la roue d'arbre (9) et avec la roue de base (11).

10. Dispositif (1) selon la revendication 9, en référence, par l'intermédiaire de la revendication 8, à la revendication 4 ou 5,
**caractérisé en ce que**
l'élément de ressort (13) est appuyé d'une part contre le support (15) et d'autre part contre la roue planétaire (13) respectivement au moins indirectement, plus particulièrement directement.

11. Dispositif (1) selon l'une des revendications précédentes,
**caractérisé en ce que**
le dispositif de capteur (16) est relié de manière solidaire en rotation avec le composant (3, 7) appartenant à la liaison de transmission de couple réglable (10, 12).

12. Dispositif (1) selon l'une des revendications précédentes,
**caractérisé par**
au moins un élément de détection (19), relié de manière solidaire en rotation avec la roue (9, 11) appartenant à la liaison de transmission de couple réglable (10, 12), s'étendant à partir de la roue (9, 11) appartenant à la liaison de transmission de couple réglable (10, 12), plus particulièrement dans la direction radiale de la roue (9, 11) appartenant à la liaison de transmission de couple réglable (10, 12), et détectable au moyen du dispositif de capteur (16), par l'intermédiaire duquel le changement de position peut être détecté au moyen du dispositif de capteur (16) par la détection de l'élément de détection (19).

13. Dispositif (1) selon l'une des revendications précédentes,
**caractérisé en ce que**
l'organe de référence (4) est conçu comme un arbre creux, dans lequel au moins une première portion de longueur de l'arbre (7) est logée dans au moins une deuxième portion de longueur de l'arbre creux.

14. Machine, avec au moins un dispositif (1) selon l'une des revendications précédentes, dans laquelle la machine est conçue comme une installation de convoyage pour le convoyage d'objets, sous la forme d'une turbine, d'une pompe ou d'un compresseur.
